# EUROPEAN PATENT APPLICATION

(11) **EP 2 592 806 A1**
(43) Date of publication of application: **15.05.2013**
(21) Application number: 11188584.4
(22) Date of filing: 10.11.2011
(51) Int. Cl.: H04L 29/06

(54) **Method of identifying a distributed infrastructure attack in a highly distributed cloud**

(71) Applicant: Alcatel-Lucent Deutschland AG, 70435 Stuttgart (DE)
(72) Inventor: Wahl, Stefan, 71701 Schwieberdingen (DE)
(74) Representative: Wetzel, Emmanuelle

(57) **Abstract**

Method of identifying a distributed infrastructure attack in a highly distributed cloud, the method comprising providing online configurable cloud protection functions with a plurality of modes.

## Description

### Field of the Invention

The invention relates to a method of identifying a distributed infrastructure attack in a highly distributed cloud.

### Background

This section introduces aspects that may be helpful in facilitating a better understanding of the invention. Accordingly, the statements of this section are to be read in this light and are not to be understood as admissions about what is in the prior art or what is not in the prior art.

Typical applications executed in today's cloud computing facilities like Amazon EC2 are mainly centered on offline batch processing jobs and web-style interactive applications. Even though some early examples of media services in the cloud like video rendering (Animoto) or media streaming (Squeeze Live Cloud) exist, cloud based deployments of interactive and personalized media services can hardly be found today. Interactivity and personalization imply requirements, which today's centralized data center cloud paradigm fails to provide. In centralized service deployments the networks will be challenged to carry expected media traffic, as due to personalization of services multicast or cache-assisted delivery mechanisms are no longer sufficient to scale networks with expected increase of traffic. Centralized deployments also have issues to meet stringent end-to-end latency budgets as required by interactive services. Finally, today's virtualization technologies fail to provide required execution performance for media intense services in an efficient manner.

### Summary

The present invention was made in view of the prior art described above, and the object of some embodiments is to provide a practical and secure cloud architecture for media services.

According to an embodiment there is provided a method of identifying a distributed infrastructure attack in a highly distributed cloud, the method comprising providing online configurable cloud protection functions with a plurality of modes.

### Description of the Embodiments

Hereinafter, the best mode for carrying out a method according to an embodiment is described in detail.
■ Generic Gate Component (GGC) is a component as any other component which is used to construct applications
■ GGC is a component applicable to any application and service in the distributed cloud. Cloud management can attach these components to any application/service.
■ GGC will always be applied at the egress and ingress ports of the distributed cloud.
■ GGC provides online configurable cloud protection functions with different modes
   - transparent mode: this mode is used if no malicious service clients or application modules are expected, GGC forwards IP packets in both direction transparently. But the GGC in the loop allows a fast adaptation to one of the other modes.
   - transparent forwarding and behavior or content monitoring mode: GGC forwards IP packets in both direction transparently, but monitors service access behavior according to provided rules (see below). Content monitoring mode is optional and may require high processing effort.
   - packet re-routing and behavior monitor mode: Behavior can be monitored based on given rules - no rule is also valid. If re-routing is activated (for black listed clients), IP packets get forwarded to a given destination address as for example: one of the service emulating honeypots
   - packet filter and managed drop/black list mode: based on client IP address or other client identification, packet streams can be filter individually e.g. signaling traffic or/and media traffic can be blocked or dropped. Black list entries can time out, which allows that an IP address is not blocked forever (due to dynamical assignment of IP4 addresses).
• GGC is typically in a slave mode and is assigned to a single application/service:
   • a security master (management) component investigates the monitoring information received from the GGCs. This master component can be distributed in the cloud and can use cloud's scalability features as any other component. Furthermore, it is advantageous to instantiate a GGC security master component for each cloud application/service. Hereby, it does not matter how many instances of this application/service are existing in the cloud.
   • in case of multiple security master components of the same application/service, they are interlinked and exchange preprocessed/condensed statistical information, which empowers each master to derive individual service access behavior overviews and acting decisions.
• GGC behavior monitoring: In the following a (incomplete) list of monitored values are given
   • client ID or IP address: allowing an individual misbehavior detection and protection
   • last service (access time, usage duration, release time)
   • weighted average of service usage durations
   • histogram of shortest (thresholds configurable) service usage durations
   • weighted average on the relation (service usage duration)/( no service duration time) [pulse pause relation]
   • media data transport volume during service usage period.
■ GGC master can individually switch on/off the above mentioned monitoring values at the GGCs
   • no monitoring of specific statistic values at GGC
   • recording at GGC but no reporting and
   • recording and statistical calculations but reporting only if certain thresholds are exceeded
   • reporting towards GGC master for deriving any conclusion
■ GGC master receives also resource management information from the RM function of the nodes which participate at the service component placement with minimum one component.
   • as the (distributed) RM on each node is an important cloud infrastructure function which ensures that sufficient component are instantiated fitting with the service request rate, it can also report its resource decisions to the security master.
   • beside the RM monitoring reports, similar to the GGC reports, the RM can additionally provide statistics derived from remapping activities between RMs of different nodes. Example: if a user client has two interfaces (LTE and DSL) which can be used alternatively, the client is attached to the cloud via two egress/ingress ports. Depending on the used client port, the RM has to re-map components to be closer to the cloud port used. The statistics from the involved RMs on the nodes indicate an oscillation towards the security master.
   • security master can influence the decision criteria of RMs for dedicated services. The security master can define e.g. a deceleration of placement decisions which may lead to a static mapping of service components independent of cloud port changes.
■ Technology applied within the security master:
   ■ Machine Learning technology (specific type e.g. SVM, decision tree, C4.5 or others have to be further analyzed) are applied within the security master to classify normal behavior from various types of anomaly service accesses.
   ■ Feature set are generated out of the information. Depending on further evaluation, these feature set may be extended or changed.
   ■ the feature set can either be generated by the GGC or by the security master. Whereby in the latter case the GGC transmits the raw data to the master. Currently, it is preferred to generate the feature set at GGC due to advantage of distributed processing.
   ■ a further variant of the invention would place the machine learning intelligence into the GGCs and the GGC would forward the local decisions to the security master for identification of correlations.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description merely illustrates the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method of identifying a distributed infrastructure attack in a highly distributed cloud, the method comprising providing online configurable cloud protection functions with a plurality of modes.

2. Method as in claim 1 wherein the functions are attached to at least one of the following: an application in the cloud and a service in the cloud.

3. Method as in claim 1 or 2 wherein the functions are applied at an egress port and an ingress port of the cloud.

4. Method as in any of the preceding claims comprising, based on a configured mode of the plurality of modes, forwarding IP packets bidirectionally.

5. Method as in any of the preceding claims comprising, based on a configured mode of the plurality of modes, monitoring service access behavior according to provided rules.

6. Method as in claim 5 comprising investigating the monitored behavior by means of a security master component.

7. Method as in claim 6 comprising instantiating a plurality of master components, each master component associated with at least one of the following: an application in the cloud and a service in the cloud.

8. Method as in claim 7 wherein the master components are interlinked, the method comprising exchanging statistical information among the master components.

9. Method as in claim 8 comprising deriving from the information, by at least one of the plurality of master components, at least one of the following: an individual service access behavior overview and an acting decision.

10. Method as in any of claims 5 to 9 wherein the behavior is monitored based on a plurality of monitoring values, the method comprising selecting the monitoring values by a master component.

11. Method as in claim 10 wherein the monitoring values comprise at least one of the following: a client identification, a client IP address, a last service usage, a weighted average of service usage durations, a histogram of shortest service usage durations, a weighted average of the pulse-pause relation, and a media data transport volume during service usage.

12. Method as in any of the preceding claims comprising, based on a configured mode of the plurality of modes, rerouting IP packets to a given destination address.

13. Method as in claim 12 wherein the destination address is associated with a honeypot.

14. Method as in any of claim 5 to 11 comprising, based on a configured mode of the plurality of modes, filtering a packet stream depending on an identification of a client.

15. Method as in claim 14 comprising detecting an attack based on the behavior and, in response to the attack, identifying a message pattern characteristic of the attack, wherein the packet data stream is filtered further depending on the message pattern.

16. Method as in claim 15 comprising classifying the client based on the behavior, wherein the packet stream is filtered further depending on the classification of the client.
